# FASCICULE DE BREVET EUROPEEN

(11) **EP 3 383 711 B1**
(45) Date de publication et mention de la délivrance du brevet: **03.06.2020**
(21) Numéro de dépôt: 16805044.1
(22) Date de dépôt: 25.11.2016
(51) Int. Cl.: B60S 1/04, B60S 1/40

(54) **ADAPTATEUR POUR UN BRAS D'ENTRAÎNEMENT D'UN SYSTÈME D'ESSUYAGE**
ADAPTER FÜR EINEN ANTRIEBSARM EINES WISCHSYSTEMS
ADAPTER FOR A DRIVE ARM OF A WIPING SYSTEM

(30) Priorité: 02.12.2015 FR 1561759; 02.12.2015 FR 1561758
(43) Date de publication de la demande: 10.10.2018
(73) Titulaire: Valeo Systèmes d'Essuyage, 78322 Le Mesnil Saint Denis (FR)
(72) Inventeur: BILLOT, Philippe, 78180 Montigny (FR); MENEGUZ, Raphaël, 78000 Versailles (FR); MURUGAN, Venkadesh, 78321 Le Mesnil St Denis (FR); LOGAIAN, Balamurugan, 78321 Le Mesnil St Denis (FR); SORIMUTHU, Velayutham, 78321 Le Mesnil St Denis (FR)
(74) Mandataire: Valeo Systèmes d'Essuyage
(86) Numéro de dépôt international: PCT/EP2016/078780
(87) Numéro de publication internationale: WO 2017/093133

(56) Documents cités:
- EP-A1- 0 354 755
- WO-A1-2007/071508
- US-A1- 2015 096 142

## Description

La présente invention se rapporte aux systèmes d'essuyage pour véhicules automobiles, et concerne plus particulièrement un adaptateur destiné à être interposé entre un connecteur et un bras d'entraînement qui sont constitutifs du système d'essuyage.

Un système d'essuyage, couramment dénommé essuie-glaces, pour véhicule automobile est conçu pour retirer, par balayage, les liquides et salissures qui peuvent perturber la vision qu'un conducteur du véhicule automobile a de son environnement. Ces essuie-glaces comprennent généralement un bras d'entraînement qui effectue un mouvement de va-et-vient angulaire autour d'un axe de rotation, et un balai d'essuyage allongé équipé d'une lame racleuse réalisée en un matériau élastique. En frottant contre une surface vitrée, avant ou arrière, du véhicule automobile, la lame racleuse en balaie l'eau et un certain nombre de salissures, et les évacue en dehors du champ de vision du conducteur.

Quelle que soit la configuration du balai d'essuyage, c'est-à-dire soit un balai d'essuyage comportant des étriers articulés qui retiennent la lame racleuse en plusieurs zones distinctes, soit un balai d'essuyage comportant une ou deux lames métalliques qui maintiennent la lame racleuse sur toute sa longueur, le balai d'essuyage est rattaché au bras d'entraînement par un système de connexion.

Dans un mode de liaison connu, un adaptateur, apte à être assemblé avec le connecteur du balai d'essuyage, est monté sur une partie terminale du bras d'entraînement. Ce mode de liaison est couramment utilisé pour les essuie-glaces destinés aux surfaces vitrées situées à l'avant du véhicule automobile. Or, ce type de liaison implique des formes massives qui génèrent une prise au vent trop importante.

Le document WO 2007/071508 A1 montre un adaptateur selon le préambule de la première revendication.

Le système de connexion est souhaité offrir une réponse satisfaisante à diverses contraintes auxquelles le système de connexion est soumis.

En premier lieu, il est souhaitable que le système de connexion entre le bras d'entraînement et le balai d'essuyage soit robuste, efficace et pérenne, tout en étant léger, le moins encombrant possible et le moins massif possible pour ne pas perturber une vision de l'utilisateur du véhicule automobile.

En second lieu, il est souhaitable que le système de connexion soit simple et aisé à mettre en œuvre par un utilisateur du véhicule pour offrir une liaison néanmoins efficace entre le bras d'entraînement et le balai d'essuyage, une telle liaison permettant par exemple un verrouillage et/ou un déverrouillage ergonomiquement aisé du balai d'essuyage sur le bras d'entraînement.

En troisième lieu, il est souhaitable que le système de connexion soit agencé pour limiter une prise d'air à un flux d'air circulant le long de la surface vitrée, afin d'interdire un décollement du balai d'essuyage de la surface vitrée, un tel décollement ayant tendance à perturber, voire à rendre inexistant, l'essuyage de la surface vitrée.

En quatrième lieu, il est souhaitable que le système de connexion comprenne un minimum de pièces pour en diminuer son coût de réalisation, son temps d'assemblage des pièces entre elles et ses modalités de référencement des pièces.

Les contraintes ci-dessus sont énumérées successivement mais revêtent toutes la même importance pour les concepteurs de systèmes d'essuyage qui recherchent le meilleur compromis entre ces différentes contraintes, un tel compromis n'étant pas satisfait par les systèmes d'essuyage de l'art antérieur.

Un but de la présente invention est de proposer un adaptateur agencé pour offrir un meilleur compromis entre des solutions aux diverses contraintes évoquées ci-dessus.

Selon une première variante de réalisation, un adaptateur de la présente invention est un adaptateur destiné à relier un balai d'essuyage à une partie terminale d'un bras d'entraînement. L'adaptateur comprend une première paroi et une deuxième paroi, avantageusement parallèles entre elles. La première paroi et la deuxième paroi sont reliées l'une à l'autre par l'intermédiaire d'au moins une paroi de liaison.

Selon la présente invention, la paroi de liaison est sécante par rapport à un plan longitudinal médian de l'adaptateur, et la première paroi est d'une première longueur qui est supérieure à une deuxième longueur de la deuxième paroi mesurées selon des droites parallèles au plan longitudinal médian de l'adaptateur. La première paroi, c'est-à-dire la plus haute des deux parois, est pourvue d'au moins un moyen de verrouillage et/ou déverrouillage de l'adaptateur sur la partie terminale. Ce moyen est par exemple voué à être pressé par l'utilisateur pour démonter le balai d'essuyage par rapport au bras d'entraînement.

Selon une deuxième variante de réalisation non revendiquée, un adaptateur de la présente invention est un adaptateur destiné à relier un balai d'essuyage à une partie terminale d'un bras d'entraînement, comprenant une première paroi et une deuxième paroi reliées l'une à l'autre par au moins une paroi de liaison, caractérisé en ce que la première paroi est d'une première longueur qui est supérieure à une deuxième longueur de la deuxième paroi, la première longueur et la deuxième longueur étant mesurées selon des droites parallèles à un plan longitudinal médian de l'adaptateur, et en ce que la paroi de liaison présente un profil courbé vu en coupe selon un plan transversal au plan longitudinal médian.

De manière plus précise, on notera que la première longueur et la deuxième longueur peuvent être mesurées selon une droite perpendiculaire à un plan passant par des extrémités libres des première et deuxième parois, celles-ci étant notamment opposées à des sommets de chaque paroi.

On notera également que les droites le long desquelles sont mesurées la première longueur et la deuxième longueur sont également parallèles l'une par rapport à l'autre.

L'adaptateur comporte avantageusement l'une quelconque au moins des caractéristiques suivantes, prise seule ou en combinaison :
- la première paroi est terminée par un premier sommet, tandis que la deuxième paroi est terminée par un deuxième sommet, la paroi de liaison reliant alors le premier sommet et le deuxième sommet. On notera que le premier sommet est notamment d'épaisseur identique à l'épaisseur de la paroi concernée,
- l'adaptateur comporte au moins un profil triangulaire vu selon un plan transversal. Un tel profil est reconnaissable en observant l'adaptateur suivant une direction longitudinale. Ce profil triangulaire peut être formé par des faces externes de l'adaptateur et/ou par des faces internes de cet adaptateur,
- la paroi de liaison comporte une face externe qui est convexe, vu d'une position située entre la première paroi et la deuxième paroi. Alternativement, le profil courbé est convexe vu d'une position située entre la première paroi et la deuxième paroi,
- le rayon de courbure de la face externe convexe est compris entre 5mm et 100mm, de préférence compris entre 7mm et 30mm, et par exemple égal à 17.7mm. Alternativement, le profil courbé de la paroi de liaison est ménagé selon un rayon de courbure compris entre 5mm et 100mm, de préférence compris entre 7mm et 30mm, et par exemple d'une valeur de 17,7mm. Lesdits rayons définissent respectivement un cercle virtuel à la périphérie duquel s'inscrit la courbure de la face externe,
- le rayon de courbure est avantageusement fixe, mais il peut également s'agir d'un rayon de courbure variable, notamment par augmentation ou diminution le long du profil courbé,
- un moyen de pivotement apte à autoriser une rotation entre l'adaptateur et un connecteur équipant le balai d'essuyage est prévu sur l'adaptateur, de préférence dans lequel le plan transversal passe par le moyen de pivotement. Selon un mode de réalisation, la première paroi et la deuxième paroi sont porteuses de ce moyen de pivotement, la paroi de liaison en étant par exemple exempte. Ce moyen de pivotement peut être formé par un arbre rapporté qui traverse l'adaptateur et le connecteur. Il peut aussi s'agir de torons issus de matière avec le connecteur et orienté vers l'extérieur de ce dernier. Dans un tel cas, le moyen de pivotement de l'adaptateur est formé par des cavités aptes à recevoir ces torons. Le moyen de pivotement peut encore être formé par deux torons issus de matière avec l'adaptateur, et aptes à être logé dans un ou des trous ménagés dans le connecteur.
- l'adaptateur peut être relié à un connecteur monté mobile en rotation sur le moyen de pivotement,
- la première paroi et la deuxième paroi sont parallèles au plan longitudinal médian, et notamment planes,
- la paroi de liaison s'étend au moins directement au-dessus du moyen de pivotement. L'adaptateur peut s'étendre longitudinalement entre une première extrémité longitudinale et une deuxième extrémité longitudinale, la paroi de liaison s'étendant entre ces deux extrémités longitudinales. Alternativement, l'adaptateur peut s'étendre longitudinalement entre une première extrémité longitudinale et une deuxième extrémité longitudinale, le profil courbé de la paroi de liaison s'étendant de la première extrémité longitudinale à la deuxième extrémité longitudinale,
- l'adaptateur comporte, à une première extrémité longitudinale, une face terminale dont un profil comporte un point d'inflexion. Cette face terminale s'étend notamment dans un plan transversal, c'est-à-dire perpendiculaire au plan longitudinal médian,
- l'adaptateur comporte, à une première extrémité longitudinale, une tête pourvue d'une échancrure médiane. Cette échancrure permet positionner l'adaptateur sur le balai d'essuyage de telle sorte qu'il couvre un déflecteur d'air équipant ledit balai,
- la tête est avantageusement délimitée de la face terminale, cette dernière présentant un profil en « S », vue selon un axe transversal à l'adaptateur,
- l'adaptateur comporte un pied qui est équipé de moyens de sécurisation additionnel d'une fixation de l'adaptateur sur la partie terminale,
- le moyen de verrouillage et/ou déverrouillage prend la forme d'une languette équipée d'un bouton de verrouillage et/ou déverrouillage,
- la languette fléchie, ou peut fléchir, autour d'un axe parallèle au plan longitudinal médian
- la paroi de liaison est sécante au plan longitudinal médian de l'adaptateur,
- le plan est orthogonal au plan longitudinal médian,
- la paroi de liaison est délimitée par une face externe et par une face interne, la face externe présentant le profil courbé tandis que la face interne est d'un profil différent de celui de la face externe. Dans un tel cas, le profil de la face interne peut être plan.
- alternativement, la face externe et la face interne peuvent présenter un profil complémentaire, voire identique,
- la première longueur et la deuxième longueur sont mesurées selon des droites perpendiculaires à un plan passant par une extrémité libre de la première paroi et par une extrémité libre de la deuxième paroi,
- la première paroi est pourvue d'un moyen de verrouillage et/ou déverrouillage de l'adaptateur sur la partie terminale, ce moyen pouvant par exemple prendre la forme d'un bouton ménagé au bout d'une languette agencée pour fléchir et reprendre sa position en l'absence d'effort,
- la première paroi et la deuxième paroi sont parallèles entre elles,
- l'adaptateur comporte, à une première extrémité longitudinale, une tête plus large qu'un corps de l'adaptateur, ladite tête étant délimitée par un rebord présentant un profil courbé vu en coupe selon un plan transversal au plan longitudinal médian et passant par la tête. En complément ou alternativement, la tête est plus haute que le corps de l'adaptateur, mesuré le long du plan longitudinal médian.

L'invention porte aussi sur un système de connexion entre un balai d'essuyage et une partie terminale d'un bras d'entraînement, comprenant un adaptateur selon l'une quelconque des caractéristiques exposées dans le présent document, un tel adaptateur étant monté pivotant sur un connecteur apte à être rendu solidaire du balai d'essuyage. La solidarisation du connecteur sur le balai d'essuyage est sans degré de liberté.

L'invention vise encore une partie terminale d'un bras d'entraînement équipée d'un adaptateur selon l'une quelconque des caractéristiques exposées dans le présent document, ou d'un système de connexion tel qu'évoqué ci-dessus.

Avantageusement, une surface interne de jambe de liaison de la partie terminale présente un profil courbé, tandis qu'une paroi de liaison de l'adaptateur présente un profil courbé, le profil courbé de la paroi de liaison étant complémentaire du profil courbé de la jambe de liaison, cette complémentarité intervenant notamment entre la face externe de l'adaptateur et la surface interne de la partie terminale.

L'ensemble de ces dispositions est tel que l'adaptateur est compact, robuste et offre une prise d'air minimisée à un flux d'air circulant le long de la surface vitrée. De plus le bouton est aisément accessible à un utilisateur souhaitant remplacer son balai d'essuyage.

D'autres caractéristiques, détails et avantages de l'invention ressortiront plus clairement à la lecture de la description donnée ci-après à titre indicatif en relation avec des dessins dans lesquels :
- la figure 1 est une vue en perspective d'un système d'essuyage selon l'invention,
- la figure 2 est une vue en coupe d'un système de connexion de la présente invention qui est monté entre une partie terminale d'un bras d'entraînement participant du système d'essuyage illustré sur la figure 1 et un balai d'essuyage,
- la figure 3 est une vue en perspective du système de connexion représenté sur la figure 2,
- la figure 4 est une vue d'un premier côté d'un adaptateur de la présente invention constitutif du système de connexion illustré sur les figures 2 et 3,
- la figure 5 est une vue d'un deuxième côté de l'adaptateur illustré sur la figure 4,
- la figure 6 est une vue de dessus de l'adaptateur illustré sur les figures 4 et 5,
- la figure 7 est une vue de dessous de l'adaptateur illustré sur les figures 4 à 6,
- la figure 8 est une vue arrière de l'adaptateur illustré sur les figures 4 à 7,
- la figure 9 est une vue avant de l'adaptateur illustré sur les figures 4 à 8,
- la figure 10 est une vue de côté de la partie terminale sur laquelle peut être rapporté l'adaptateur illustré sur les figures 4 à 9,
- la figure 11 est une vue de dessous en perspective de la partie terminale illustrée sur la figure 10,
- la figure 12 est une vue en perspective de dessus et de l'avant de la partie terminale représentée sur les figures 10 et 11,
- la figure 13 est une vue de face de la partie terminale représentée sur les figures 10 à 12,
- la figure 14 est une vue en perspective de dessus de la partie terminale illustrée sur les figures 10 à 13 munie du système de connexion illustré sur les figures 2 et 3.

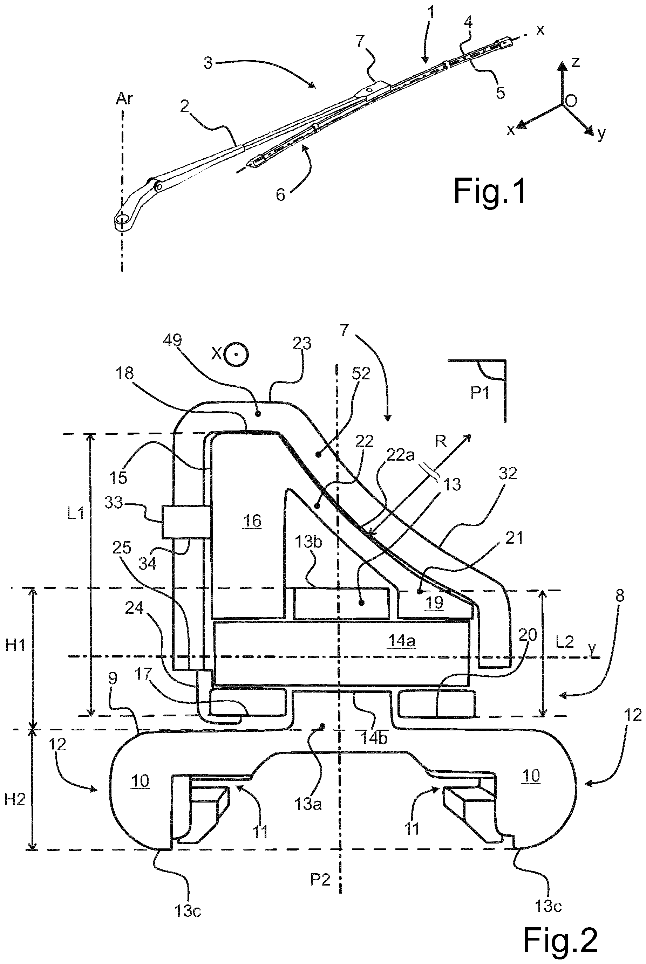

Sur les figures, les dénominations longitudinale, latérale, transversale, verticale, dessus, dessous, se réfèrent à l'orientation d'un balai d'essuyage 1 illustré sur la figure 1. Une direction longitudinale correspond à un axe longitudinal X selon lequel le balai d'essuyage 1 s'étend. Cet axe X définit également une direction longitudinale de l'adaptateur objet de l'invention. Une direction transversale correspond à celle d'un axe transversal Y qui est perpendiculaire à l'axe longitudinal X et à un axe de rotation Aᵣ d'un bras d'entraînement 2 constitutif d'un système d'essuyage 3. Une direction verticale, parallèle à celle d'un axe vertical Z, et les dénominations supérieure ou inférieure se rapportent à des orientations parallèles à l'axe de rotation Aᵣ du bras d'entraînement 2 du système d'essuyage 3, la dénomination inférieure contenant le plan du pare-brise. Pour les directions longitudinales, les dénominations extérieure ou intérieure s'apprécient par rapport à un point de pivotement du balai d'essuyage 1 sur un bras d'entraînement 2 du balai d'essuyage 1, la dénomination intérieure correspondant à la partie où le bras d'entraînement 2 et un demi-balai s'étendent, la dénomination extérieure correspondant à la partie où l'autre demi-balai s'étend.

Les directions évoquées ci-dessus sont illustrées dans un repère orthonormé Oxyz représenté sur les figures. Dans ce repère, l'axe Ox représente la direction longitudinale, l'axe Oy représente la direction transversale, et l'axe Oz représente la direction verticale.

Sur la figure 1, un véhicule automobile est couramment équipé du système d'essuyage 3 pour évacuer une eau et/ou des salissures présentes sur une surface vitrée, notamment un pare-brise avant du véhicule automobile. Le système d'essuyage 3 comprend le bras d'entraînement 2 qui est apte à effectuer un mouvement de va-et-vient angulaire le long et au-dessus de la surface vitrée. La surface vitrée est indifféremment le pare-brise avant ou une lunette arrière équipant le véhicule automobile.

Le système d'essuyage 3 comprend aussi le balai d'essuyage 1 qui s'étend selon un axe principal, dit axe longitudinal X parallèle à l'axe Ox. Le balai d'essuyage 1 comprend au moins un déflecteur d'air 4 et une lame racleuse 5. Le déflecteur d'air 4 est prévu pour transformer une pression appliquée par un flux d'air circulant le long de la surface vitrée en une force d'appui du balai d'essuyage 1 contre la surface vitrée du véhicule automobile. La lame racleuse 5 est la pièce du balai d'essuyage 1 en contact direct avec la surface vitrée pour évacuer l'eau et/ou les salissures présentes sur ce dernier. Le déflecteur d'air 4 et la lame racleuse 5 forment un ensemble semi-rigide 6 qui est porté par un système de connexion 7, interposé entre le bras d'entraînement 2 et l'ensemble semi-rigide 6.

Le système de connexion 7 assure une liaison mécanique entre le bras d'entraînement 2 et le balai d'essuyage 1 et permet ainsi de séparer le balai d'essuyage 1 du bras d'entraînement 2, en vue d'un remplacement du balai d'essuyage 1.

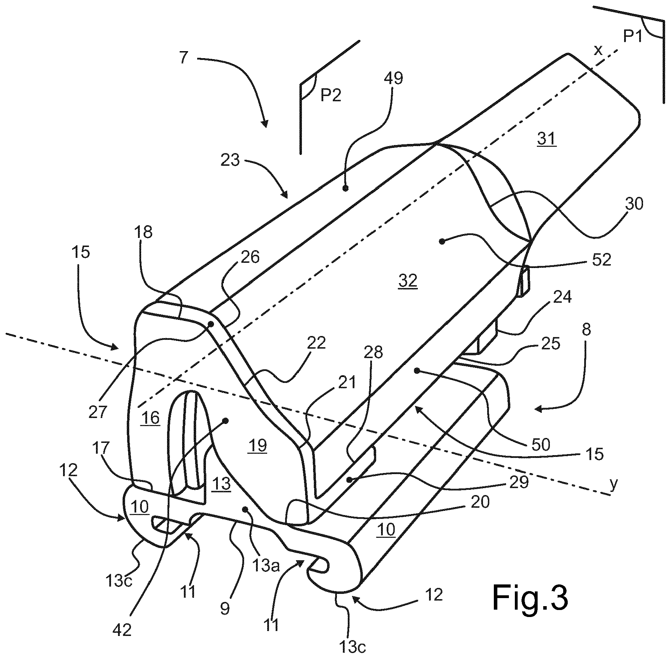

Sur les figures 2 et 3, le système de connexion 7 comprend un connecteur 8 qui est apte à porter le balai d'essuyage 1 et un adaptateur 15 sur lequel est monté mobile en rotation le connecteur 8. Ces dispositions visent par exemple à permettre au balai d'essuyage 1 de suivre une courbure du pare-brise lors d'un mouvement de va-et-vient du balai d'essuyage 1 opéré par le bras d'entraînement 2 le long de la surface vitrée du véhicule automobile. L'adaptateur 15 est porté par une partie terminale 23 du bras d'entraînement 2, la partie terminale 23 étant indifféremment une extrémité du bras d'entraînement 2 lui-même ou bien une pièce rapportée sur le bras d'entrainement 2 et dont la partie terminale 23 constitue l'extrémité.

Selon un mode de réalisation de l'invention, le connecteur 8 et l'adaptateur 15 sont réalisés par moulage d'un matériau polymère, par exemple un matériau de la famille des Polyoxyméthylènes, connue sous l'acronyme POM, ou par moulage d'un mélange de matériaux polymères, par exemple un mélange de polymères de la famille des polycarbonates et de la famille des Acrylonitrile Butadiène Styrène, connue sous l'acronyme ABS. Dans la description qui vient, on comprend que le connecteur 8 et/ou l'adaptateur 15, et tous leurs constituants, peuvent former chacun une pièce unitaire, c'est-à-dire monobloc.

Selon un mode de réalisation, la partie terminale 23 est réalisée par pliage d'un feuillard métallique, tel qu'une tôle en acier ou aluminium, ou analogue.

En se reportant plus particulièrement à la figure 2, le connecteur 8 comprend une embase 9 qui comporte au moins deux rails 10 parallèles ménagés selon l'axe longitudinal X et orthogonalement à un plan transversal P₁, qui est parallèle au plan Oyz. Chaque rail 10 comprend une rainure 11 qui est ménagée en vis-à-vis à égale distance d'un plan longitudinal médian P₂, orthogonal au plan transversal P₁. Plus particulièrement, les rainures 11 sont disposées en vis-à-vis l'une de l'autre pour former conjointement des crochets 12 de maintien d'éléments de structure du balai d'essuyage 1.

Le plan longitudinal médian P₂ s'étend le long de l'axe longitudinal X et passe au centre de l'adaptateur 15, ou de la pièce terminale 23, selon l'axe transversal Y. Ce centre peut être déterminé à partir d'une mesure effectuée entre la face externe soit de parois constitutives de l'adaptateur, soit de jambes constitutives de la pièce terminale.

Le connecteur 8 comprend aussi un corps 13 qui surplombe l'embase 9 et qui s'étend globalement parallèlement au plan longitudinal médian P₂. Le corps 13 est agencé en une platine longitudinale qui est montée mobile en rotation sur l'adaptateur 15 sensiblement à l'intérieur du plan longitudinal médian P₂. A cet effet, et selon le mode de réalisation illustré, le corps 13 comprend au moins un palier 14b de réception d'un arbre 14a qui traverse l'adaptateur 15. L'arbre 14a s'étend préférentiellement selon un axe transversal Y, orthogonal à l'axe longitudinal X et au plan longitudinal médian P₂.

Selon un autre mode de réalisation, le corps 13 peut comprendre deux doigts respectivement ménagés sur chacune de ses faces latérales parallèles, les doigts venant s'emboîter à l'intérieur de logements que comprend une surface interne de l'adaptateur 15. Selon encore un autre mode, le corps 13 comprend deux orifices respectivement ménagés sur chacune de ses faces latérales parallèles, ou un trou traversant, les orifices ou le trou recevant des torons émergent d'une surface interne de l'adaptateur 15. Selon les deux derniers modes cités, les doigts d'une part, ou les torons d'autre part, sont alignés l'un et l'autre selon l'axe transversal Y pour former conjointement un moyen équivalent à l'arbre 14a de rotation du connecteur 8 par rapport à l'adaptateur 15, tel qu'illustré sur la figure 2.

Le corps 13 du connecteur 8 est d'une première hauteur H₁ prise entre une base 13a et une extrémité distale 13b du corps 13. L'embase 9 du connecteur 8 est d'une deuxième hauteur H2 prise entre la base 13a du corps 13 et un plan reliant des extrémités proximales 13c de l'embase 9. La première hauteur H₁ et la deuxième hauteur H2 sont prises à l'intérieur du plan longitudinal médian P₂. La première hauteur H₁ est préférentiellement comprise entre 1 fois et 1,2 fois la deuxième hauteur H2. Il en résulte un format compact du connecteur 8 de telle sorte que le système de connexion 7 présente également une caractéristique avantageuse de compacité.

L'adaptateur 15 comprend une première paroi 16 d'une première longueur L₁, prise entre une première extrémité 17 et un premier sommet 18. L'adaptateur 15 comprend aussi une deuxième paroi 19 d'une deuxième longueur L₂, prise entre une deuxième extrémité 20 et un deuxième sommet 21. La première paroi 16 et la deuxième paroi 19 sont préférentiellement planes. La première paroi 16 et la deuxième paroi 19 sont parallèles l'une à l'autre et parallèles au plan longitudinal médian P₂. La première longueur L₁ est supérieure à la deuxième longueur L₂. La première longueur L₁ est par exemple supérieure au double de la deuxième longueur L₂.

Le premier sommet 18 et le deuxième sommet 21 sont reliés l'un à l'autre par une paroi de liaison 22 délimitée par une face externe 22a qui est convexe, vu pour un observateur regardant la face externe 22a depuis l'arbre 14a de rotation du connecteur 8 sur l'adaptateur 15, ou depuis une position comprise entre la première paroi 16 et la deuxième paroi 19 délimitant latéralement l'adaptateur 15. La paroi de liaison 22, ou au moins sa face externe 22a, est par exemple ménagée selon un rayon de courbure R qui est supérieur à la première longueur L₁. Par exemple encore, le rayon de courbure R est supérieur au double de la première longueur L₁. A titre d'exemple, le rayon de courbure R est compris entre 5mm et 100mm, de préférence compris entre 7mm et 30mm. Sur l'exemple illustré sur les figures, le rayon de courbure R est égal 17,7mm, ce qui constitue un bon compromis entre l'appui de l'air sur l'adaptateur 15 via la partie terminale 23 et la place néanmoins nécessaire pour disposer le connecteur 8 et autoriser une rotation de celui-ci vis-à-vis de l'adaptateur 15. Un tel rayon défini un cercle virtuel à la périphérie duquel s'inscrit la courbure de la face externe.

Le rayon de courbure est avantageusement fixe, mais il peut également s'agir d'un rayon de courbure variable, notamment par augmentation ou diminution le long du profil courbé. Ce rayon de courbure définit le rayon d'un cercle dans le périmètre duquel s'inscrit la face externe 22a de la paroi de liaison 22. On notera que ce rayon peut être fixe, si bien que le profil courbé forme un secteur circulaire constant. Alternativement, le rayon de courbure peut varier, ce qui permet d'ouvrir ou de fermer le profil courbé. Enfin, on notera que le rayon de courbure peut également varier le long de l'axe longitudinal X de l'adaptateur 15, de la partie terminale 23, entre leur première extrémité longitudinale et leur deuxième extrémité longitudinale.

La paroi de liaison 22 est une paroi sécante par rapport au plan longitudinal médian P₂. On comprend ici que la paroi de liaison 22 occupe une large part de la dimension transversale de l'adaptateur 15, c'est-à-dire supérieure à 50% de sa largeur mesurée selon l'axe transversale Y. C'est ainsi qu'une section passant par le plan longitudinal médian P₂ coupe la paroi de liaison 22. Ces dispositions sont telles que, selon une coupe ménagée selon le plan transversal P₁ et passant par l'axe transversal Y, l'adaptateur 15 présente un profil triangulaire au-dessus d'un plan horizontal qui passe par le deuxième sommet 21 et qui est orthogonal au plan longitudinal médian P₂. Ce profil triangulaire est reconnaissable en observant en section la paroi extérieure de l'adaptateur 15, mais éventuellement ou alternativement, en observant en section un volume interne de l'adaptateur 15 délimité par une surface interne.

En se reportant également à la figure 3, la partie terminale 23 du bras d'entraînement 2 forme une enveloppe qui recouvre la première paroi 16, la paroi de liaison 22 et la deuxième paroi 19 de l'adaptateur. Plus particulièrement, la partie terminale 23 surplombe le système de connexion 7 comprenant l'adaptateur 15 et le connecteur 8. Autrement dit, les caractéristiques géométriques de la partie terminale 23 qui vont être décrites ci-après, et notamment les caractéristiques géométriques en coupe selon le plan transversal P₁ de la partie terminale 23 sont valables pour l'ensemble de la partie terminale 23 couvrant le système de connexion 7. L'adaptateur 15 est reçu dans la partie terminale 23, essentiellement selon un mouvement de translation le long de l'axe longitudinal X.

Pour faciliter une mise en place et/ou un maintien de l'adaptateur 15 dans la partie terminale 23, la partie terminale 23 est notamment équipée d'un couple de glissières 24 d'accrochage de la partie terminale 23 sur l'adaptateur 15. Les glissières 24 sont notamment ménagées sur un rebord longitudinal respectif 25 de la partie terminale 23, qui s'étend selon l'axe longitudinal X. Les glissières 24 sont préférentiellement disposées à l'intérieur du plan transversal P₁ et ménagées en vis-à-vis l'une de l'autre. Ces deux glissières 24 sont des bords pliés vers l'intérieur de la partie terminale 23, en étant issus de matière avec une première jambe et avec une deuxième jambe délimitant latéralement la partie terminale 23. Ces glissières 24 forment un organe de guidage en translation de l'adaptateur 15 dans la partie terminale 23 lors d'un mouvement de mise en place de l'adaptateur 15 sur la partie terminale 23.

La partie terminale 23 comprend une extrémité longitudinale libre, appelée première extrémité longitudinale 26, qui est prévue pour venir au contact d'une face terminale 27 de l'adaptateur 15, à la fin du mouvement en translation décrit ci-dessus. Cette face terminale 27 est ménagée à une première extrémité longitudinale de l'adaptateur 15. De même, la partie terminale 23 comprend une bordure longitudinale 28 qui est prévue pour venir au contact d'une butée verticale 29 de l'adaptateur 15. La butée verticale 29 et la bordure longitudinale 28 sont ménagées selon un plan horizontal qui est orthogonal au plan transversal P₁ et au plan longitudinal médian P₂. La butée verticale 29 et la bordure longitudinale 28 forment conjointement un moyen de blocage vertical de l'adaptateur 15 et de la partie terminale 23 en association avec un profil particulier de la face terminale 27 telle que décrit ci-dessous.

La partie terminale 23 comprend une deuxième extrémité longitudinale 30 qui est opposée à la première extrémité longitudinale 26 et qui est solidaire d'un manchon 31 équipant le bras d'entraînement 2 et/ou issu du bras d'entraînement 2. Entre la première extrémité longitudinale 26 et la deuxième extrémité longitudinale 30, la partie terminale 23 comporte une surface externe 32 qui est convexe et qui peut être ménagée selon le même rayon de courbure R que la face externe 22a de la paroi de liaison 22, évoqué ci-dessus. Dans un tel cas, la surface externe 32 est conformée de manière homothétique à la conformation de la face externe 22a de la paroi de liaison 22. Plus particulièrement, la surface externe 32 est d'une conformation identique à celle de la paroi de liaison 22. Bien entendu, le rayon de courbure de la surface externe 23 peut également être différent du rayon de courbure de la face externe 22a. Le caractère convexe de la surface externe 32 s'entend vu de l'intérieur de la partie terminale 23, c'est-à-dire depuis une position située entre les jambes définissant la partie terminale 23. Les dispositions définissant les différents modes de réalisation du rayon de courbure de la paroi de liaison 22 détaillées auparavant s'appliquent mutatis-mutandis au rayon de courbure définissant la partie terminale 23.

En se reportant à nouveau à la figure 2, la première paroi 16 est équipée d'un moyen 33 de verrouillage et/ou déverrouillage de l'adaptateur 15 dans la partie terminale 23. Selon l'exemple illustré, le moyen de verrouillage et/ou déverrouillage est un bouton 33 escamotable qui peut être fléchi sous une pression manuelle. En position de verrouillage, telle que représentée sur la figure 2, le bouton 33 émerge à travers une fenêtre 34 ménagée à travers la partie terminale 23, de telle sorte qu'un appui effectué par un utilisateur sur le bouton 33 permet un désengagement du bouton 33 hors de la fenêtre 34 pour désolidariser l'adaptateur 15 de la partie terminale 23. Autrement dit, le bouton 23 est escamotable entre une position de verrouillage dans laquelle le bouton 33 est logé à l'intérieur de la fenêtre 34 et une position de déverrouillage dans laquelle le bouton 33 est positionné hors de la fenêtre 34.

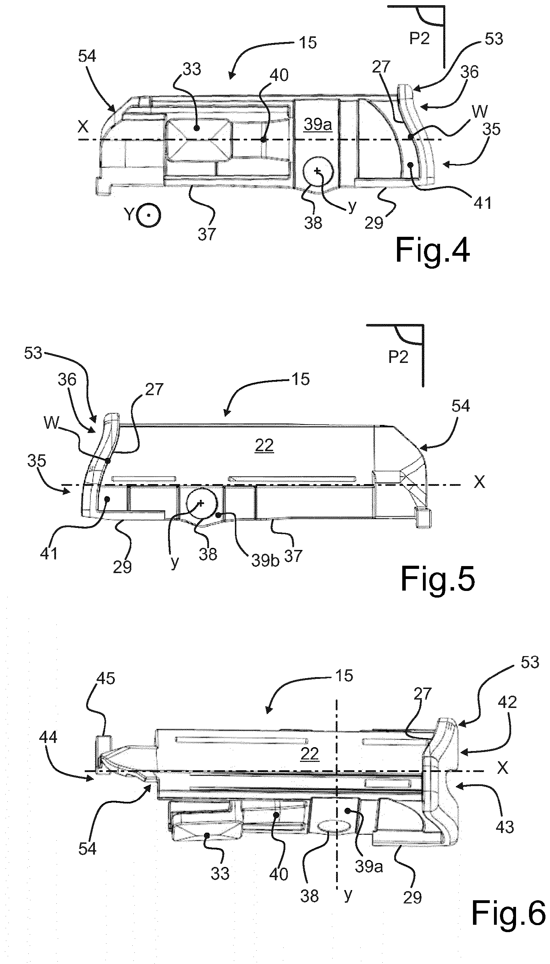

Sur les figures 4 et 5, la face terminale 27 de l'adaptateur 15 présente un profil comportant un point d'inflexion W. Autrement dit, la face terminale 27 comprend une zone inférieure 35 qui émerge, selon l'axe longitudinal X de l'adaptateur 15, par rapport à une zone supérieure 36 que comprend également la face terminale 27. Autrement dit encore, la zone inférieure 35 de la face terminale 27 forme un renflement longitudinal de l'adaptateur 15 et constitue une extrémité longitudinale avancée de ce dernier. Un tel profil en « S » de la face terminale 27, vue de côté, permet à une partie inférieure 46 de la première extrémité longitudinale 26 de la partie terminale 23 de venir se loger à l'intérieur de la zone inférieure 35, ce qui immobilise l'adaptateur 15 sur la partie terminale 23 et interdit une échappée verticale de ce dernier. Ceci est obtenu à partir d'une complémentarité du profil en « S » de la face terminale 27 et d'un profil en « S » de la première extrémité longitudinale 26, tel qu'il sera décrit plus loin.

Ces dispositions sont telles que la zone inférieure 35 participe de moyens de fixation 24, 35 de l'adaptateur 15 dans la partie terminale 23, ces moyens de fixation 24, 35 comprenant également les glissières 24 décrites ci-dessus qui viennent en contact des bords inférieurs 37 de l'adaptateur 15. Autrement dit, une fixation de l'adaptateur 15 dans la partie terminale 23 est obtenue à partir d'une mise en contact des glissières 24 de la partie terminale 23 avec les bords inférieurs 37 de l'adaptateur 15 et d'un encastrement de la partie inférieure 46 de la première extrémité longitudinale 26 de la partie terminale 23 à l'intérieur de la zone inférieure 35 de la face terminale 27 de l'adaptateur 15.

La figure 5 montre également que la paroi de liaison 22 est située au moins au-dessus et à l'aplomb du moyen de pivotement de l'adaptateur 15, ici formé par exemple par les trous 38. Cette paroi de liaison s'étend notamment longitudinalement entre la première extrémité longitudinale 53 et une deuxième extrémité longitudinale 54 délimitant l'adaptateur 15 le long de l'axe longitudinal X. Cette paroi s'étend ainsi sur toute la longueur de l'adaptateur 15.

L'adaptateur 15 comprend par exemple deux orifices 38 pour le maintien de l'arbre 14a, les orifices 38 étant ménagés dans deux portions longitudinales 39a, 39b opposées l'une à l'autre par rapport au plan longitudinal médian P₂. Ces orifices 38 forment ici un exemple de réalisation du moyen de pivotement dont est équipé l'adaptateur 15. Une première portion longitudinale 39a issue de la première paroi 16 est pourvue d'une languette 40 qui est équipée du bouton 33 de verrouillage et/ou déverrouillage de l'adaptateur 15 dans la partie terminale 23. La languette 40 et le bouton 33 sont alignés selon l'axe longitudinal X. La languette 40 est montée basculante sur la première portion longitudinale 39a de telle sorte que le bouton 33 est, dans une première partie de sa course en basculement, mobile sensiblement selon l'axe transversal Y. La languette 40 est ainsi articulée en rotation autour d'un axe parallèle et décalé par rapport au plan longitudinal médian P₂. Cet axe d'articulation passe par la première paroi 16. De préférence, le bouton 33 est un bouton qui comporte une face d'appui plane et qui est principalement formé d'un élément évidé à l'opposé de sa face d'appui.

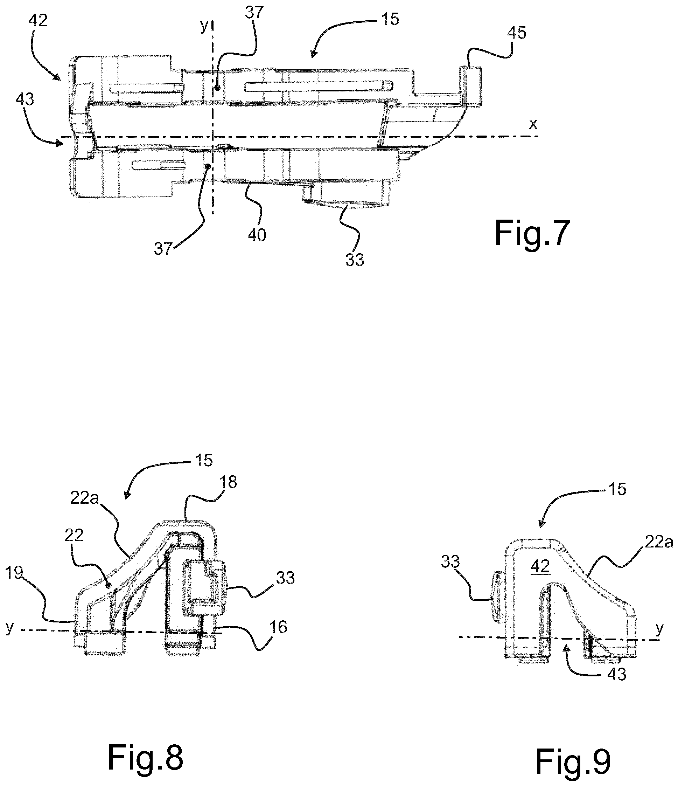

Sur la figure 6 à 9, la face terminale 27 est ménagée sur une tête 42 de l'adaptateur 15 qui présente un profil homothétique au profil de la face terminale 27. Autrement dit, la tête 42 comprend une base inférieure qui est avancée par rapport à un sommet supérieur. La tête 42 comprend également une échancrure médiane 43 pour permettre un passage du balai d'essuyage 1, notamment de son déflecteur d'air. A l'opposé de la tête 42, l'adaptateur 15 comprend un pied 44 qui est équipé de moyens de sécurisation 45 constitués d'au moins une butée transversale, et préférentiellement d'une unique butée transversale. La butée transversale s'étend préférentiellement selon un axe parallèle à l'axe transversal Y. Ces moyens de sécurisation 45 visent à maintenir en place le balai d'essuyage 1 sur le bras d'entraînement 2 en cas de rupture du moyen 33 de verrouillage et/ou déverrouillage. La tête 42 délimitée au moins par la face terminale 27 forme notamment un rebord émergeant transversalement et verticalement au-delà d'une paroi externe 41 de l'adaptateur 15.

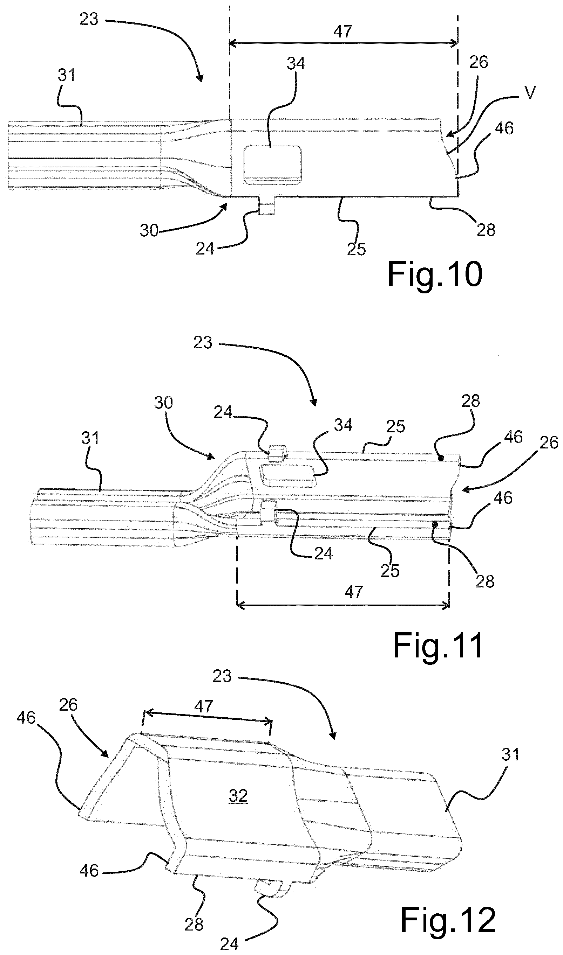

Sur les figures 10 à 13, la partie terminale 23 comprend une zone de jonction 47 qui est comprise entre la première extrémité longitudinale 26 et la deuxième extrémité longitudinale 30 et qui est prévue pour recevoir et recouvrir l'adaptateur 15. La figure 10 illustre la forme de l'extrémité libre 26 de la partie terminale 23 complémentaire au profil en « S » de la face terminale 27 de l'adaptateur 15. C'est ainsi que, vu de côté, le profil de l'extrémité libre 26 présente au moins un point d'inflexion V de sorte que ce profil forme une « S ».

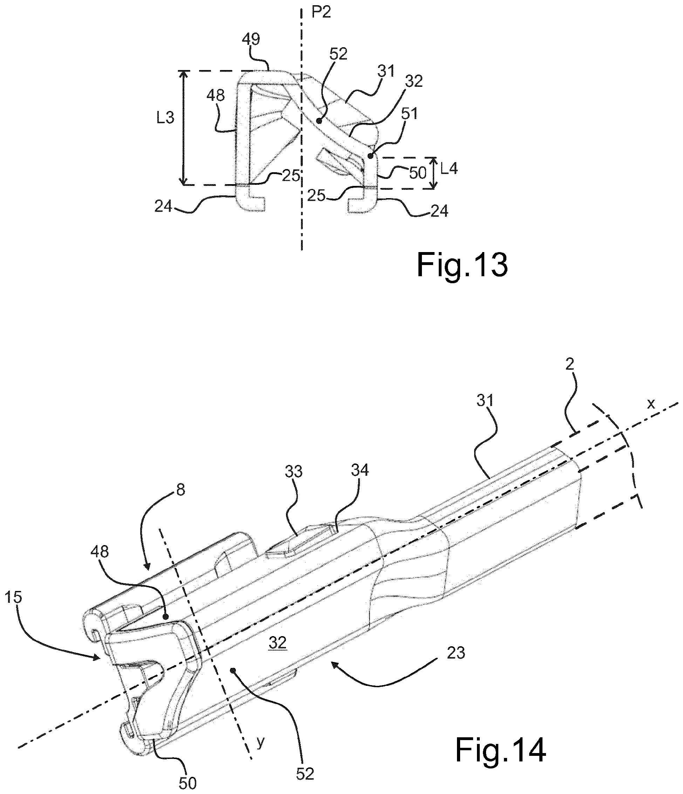

Sur la figure 13, la zone de jonction 47 comprend une première jambe 48 d'une troisième longueur L₃, mesurée entre le rebord longitudinal 25 et un troisième sommet 49, le long d'une droite parallèle au plan longitudinal médian P₂ de la partie terminale 23. La zone de jonction 47 comprend aussi une deuxième jambe 50 d'une quatrième longueur L₄, mesurée entre le rebord longitudinal 25 et un quatrième sommet 51, le long d'une droite parallèle au plan longitudinal médian P₂ de la partie terminale 23.

La première jambe 48 et la deuxième jambe 50 sont préférentiellement planes. La première jambe 48 et la deuxième jambe 50 sont parallèles l'une à l'autre et parallèles au plan longitudinal médian P₂. La troisième longueur L₃ est supérieure à la quatrième longueur L₄. La troisième longueur L₃ est par exemple supérieure au double de la quatrième longueur L₄. On note à ce stade de la description que, selon une coupe réalisée dans le plan transversal P₁, la partie terminale 23 présente un profil triangulaire, par exemple du même type que celui de l'adaptateur 15 décrit ci-dessus. Ainsi , le troisième sommet 49 et le quatrième sommet 51 sont reliés l'un à l'autre par une jambe de liaison 52 comportant la surface externe 32 qui est convexe pour un observateur regardant la partie terminale 23, depuis un point situé entre la première jambe 48 et la deuxième jambe 50. La jambe de liaison 52 épouse avantageusement la forme de la paroi de liaison 22 en étant en contact étroit l'une avec l'autre pour offrir une compacité optimisée et une meilleure rigidité et solidité au système de connexion 7. Ainsi, la jambe de liaison 52 forme une paroi d'appui, ou de reprise d'efforts, de la paroi de liaison 22 lorsqu'un utilisateur pince le système de connexion 7 et la partie terminale 23 pour appuyer sur le moyen 33 de verrouillage et/ou déverrouillage, tel que décrit ci-dessous.

On notera que le profil triangulaire de la partie terminale 23 est reconnaissable en observant en section une surface extérieure de la partie terminale 23, mais éventuellement ou alternativement, en observant en section un volume interne de cette partie terminale 23 délimitée par une surface interne. Selon le mode de réalisation illustré, le troisième sommet 49 forme un plateau qui s'étend dans un plan perpendiculaire au plan de la première jambe 48. Ce plateau relie alors directement la première jambe 48 à la jambe de liaison 52.

En se reportant à la figure 14, qui représente la partie terminale 23 logeant l'adaptateur 15 porteur du connecteur 8, on remarque la compacité de l'ensemble formé par ces éléments ainsi que la disposition opposée de la première jambe 48 munie de la fenêtre 34 à travers laquelle émerge le moyen 33 de verrouillage et/ou déverrouillage et la jambe de liaison 52 dont la surface externe 32 est convexe, vue par exemple de l'adaptateur 15. Ces dispositions offrent un profil aérodynamique appropriée à cet ensemble pour éviter un décollement du balai d'essuyage 3 de la surface vitrée du véhicule automobile, tout en offrant une ergonomie de verrouillage et de déverrouillage de l'adaptateur 15 vis-à-vis de la partie terminale 23, à partir de la présence du bouton 33 émergeant à l'opposé de la surface externe 32, cette dernière pouvant avantageusement servir de surface d'appui à un doigt d'un utilisateur en opposition à un autre doigt de l'utilisateur venant appuyer sur le bouton 33.

## Revendications

1. Adaptateur (15) destiné à relier un balai d'essuyage (1) à une partie terminale (23) d'un bras d'entraînement (2), comprenant une première paroi (16) et une deuxième paroi (19), la première paroi (16) et la deuxième paroi (19) étant reliées l'une à l'autre par au moins une paroi de liaison (22), **caractérisé en ce que** la paroi de liaison (22) est sécante à un plan longitudinal médian (P₂) de l'adaptateur (15), et **en ce que** la première paroi (16) est d'une première longueur (L₁) qui est supérieure à une deuxième longueur (L₂) de la deuxième paroi (19), la première longueur (L₁) et la deuxième longueur (L₂) étant mesurées selon des droites parallèles au plan longitudinal médian (P₂), et **en ce que** la première paroi (16) est pourvue d'au moins un moyen (33) de verrouillage et/ou déverrouillage de l'adaptateur (15) sur la partie terminale (23).

2. Adaptateur (15) selon la revendication 1, dans lequel la première paroi (16) est terminée par un premier sommet (18), tandis que la deuxième paroi (19) est terminée par un deuxième sommet (21), la paroi de liaison (22) reliant le premier sommet (18) et le deuxième sommet (21).

3. Adaptateur (15) selon l'une quelconque des revendications précédentes, dans lequel l'adaptateur (15) comporte au moins un profil triangulaire selon un plan transversal (P₁).

4. Adaptateur (15) selon l'une quelconque des revendications précédentes, dans lequel la paroi de liaison (22) comporte une face externe (22a) qui est convexe vu d'une position située entre la première paroi (16) et la deuxième paroi (19).

5. Adaptateur (15) selon la revendication précédente, dans lequel la face externe (22a) convexe est ménagée selon un rayon de courbure (R) compris entre 5mm et 100mm, de préférence compris entre 7mm et 30mm.

6. Adaptateur (15) selon l'une quelconque des revendications précédentes, comprenant un moyen de pivotement apte à autoriser une rotation entre l'adaptateur (15) et un connecteur (8) équipant le balai d'essuyage.

7. Adaptateur (15) selon l'une quelconque des revendications précédentes, dans lequel la première paroi (16) et la deuxième paroi (19) sont parallèles au plan longitudinal médian (P₂).

8. Adaptateur (15) selon l'une quelconque des revendications précédentes, qui s'étend longitudinalement entre une première extrémité longitudinale (53) et une deuxième extrémité longitudinale (54), la paroi de liaison (22) s'étendant de la première extrémité longitudinale (53) à la deuxième extrémité longitudinale (54).

9. Adaptateur (15) selon l'une quelconque des revendications précédentes, dans lequel l'adaptateur (15) comporte, à une première extrémité longitudinale (53), une face terminale (27) dont un profil comporte au moins un point d'inflexion (W).

10. Adaptateur (15) selon l'une quelconque des revendications précédentes, dans lequel l'adaptateur (15) comporte, à une première extrémité longitudinale (53), une tête (42) plus large qu'un corps de l'adaptateur et pourvue d'une échancrure (43).

11. Adaptateur (15) selon les revendications 9 et 10, dans lequel la tête (42) est délimitée par la face terminale (27), cette dernière présentant un profil en « S ».

12. Adaptateur (15) selon l'une quelconque des revendications précédentes, dans lequel le moyen (33) de verrouillage et/ou déverrouillage prend la forme d'une languette (40) équipée d'un bouton (33) de verrouillage et/ou déverrouillage.

13. Adaptateur (15) selon la revendication précédente, dans lequel la languette (40) peut fléchir autour d'un axe parallèle au plan longitudinal médian (P₂).

14. Système de connexion entre un balai d'essuyage (1) et une partie terminale (23) d'un bras d'entraînement (2), comprenant un adaptateur (15) selon l'une quelconque des revendications précédentes monté pivotant sur un connecteur (8) apte à être rendu solidaire du balai d'essuyage (1).

15. Partie terminale (23) d'un bras d'entraînement (2) équipée d'un adaptateur (15) selon l'une quelconque des revendications 1 à 13, ou d'un système de connexion selon la revendication 14.

## Patentansprüche

1. Adapter (15), welcher dazu bestimmt ist, ein Wischblatt (1) mit einem Endteil (23) eines Antriebsarmes (2) zu verbinden, und welcher eine erste Wand (16) und eine zweite Wand (19) umfasst, wobei die erste Wand (16) und die zweite Wand (19) durch wenigstens eine Verbindungswand (22) miteinander verbunden sind, **dadurch gekennzeichnet, dass** die Verbindungswand (22) eine Mittellängsebene (P₂) des Adapters (15) schneidet, und dadurch, dass die erste Wand (16) eine erste Länge (L₁) aufweist, welche größer als eine zweite Länge (L₂) der zweiten Wand (19) ist, wobei die erste Länge (L₁) und die zweite Länge (L₂) entlang von Geraden gemessen werden, die zur Mittellängsebene (P₂) parallel sind, und dadurch, dass die erste Wand (16) mit wenigstens einem Mittel (33) zur Verriegelung und/oder Entriegelung des Adapters (15) an dem Endteil (23) versehen ist.

2. Adapter (15) nach Anspruch 1, wobei die erste Wand (16) von einem ersten Scheitel (18) abgeschlossen wird, während die zweite Wand (19) von einem zweiten Scheitel (21) abgeschlossen wird, wobei die Verbindungswand (22) den ersten Scheitel (18) und den zweiten Scheitel (21) verbindet.

3. Adapter (15) nach einem der vorhergehenden Ansprüche, wobei der Adapter (15) wenigstens ein dreieckiges Profil entlang einer Querebene (P₁) aufweist.

4. Adapter (15) nach einem der vorhergehenden Ansprüche, wobei die Verbindungswand (22) eine Außenseite (22a) aufweist, welche, von einer zwischen der ersten Wand (16) und der zweiten Wand (19) befindlichen Position aus gesehen, konvex ist.

5. Adapter (15) nach dem vorhergehenden Anspruch, wobei die konvexe Außenseite (22a) mit einem Krümmungsradius (R) zwischen 5 mm und 100 mm, vorzugsweise zwischen 7 mm und 30 mm, ausgebildet ist.

6. Adapter (15) nach einem der vorhergehenden Ansprüche, welcher ein Schwenkmittel umfasst, das geeignet ist, eine Drehung zwischen dem Adapter (15) und einem Verbinder (8), mit dem das Wischblatt ausgestattet ist, zu ermöglichen.

7. Adapter (15) nach einem der vorhergehenden Ansprüche, wobei die erste Wand (16) und die zweite Wand (19) parallel zur Mittellängsebene (P₂) sind.

8. Adapter (15) nach einem der vorhergehenden Ansprüche, welcher sich in Längsrichtung zwischen einem ersten Längsende (53) und einem zweiten Längsende (54) erstreckt, wobei sich die Verbindungswand (22) vom ersten Längsende (53) zum zweiten Längsende (54) erstreckt.

9. Adapter (15) nach einem der vorhergehenden Ansprüche, wobei der Adapter (15) an einem ersten Längsende (53) eine Endfläche (27) aufweist, von der ein Profil wenigstens einen Wendepunkt (W) aufweist.

10. Adapter (15) nach einem der vorhergehenden Ansprüche, wobei der Adapter (15) an einem ersten Längsende (53) ein Kopfstück (42) aufweist, das breiter als ein Körper des Adapters ist und mit einem Einschnitt (43) versehen ist.

11. Adapter (15) nach den Ansprüchen 9 und 10, wobei das Kopfstück (42) von der Endfläche (27) begrenzt wird, wobei diese Letztere ein S-förmiges Profil aufweist.

12. Adapter (15) nach einem der vorhergehenden Ansprüche, wobei das Mittel (33) zur Verriegelung und/oder Entriegelung die Form einer Zunge (40) annimmt, die mit einer Taste (33) zur Verriegelung und/oder Entriegelung ausgestattet ist.

13. Adapter (15) nach dem vorhergehenden Anspruch, wobei sich die Zunge (40) um eine Achse biegen kann, die zur Mittellängsebene (P₂) parallel ist.

14. System zur Verbindung zwischen einem Wischblatt (1) und einem Endteil (23) eines Antriebsarmes (2), welches einen Adapter (15) nach einem der vorhergehenden Ansprüche umfasst, der schwenkbar an einem Verbinder (8) angebracht ist, der mit dem Wischblatt (1) fest verbindbar ist.

15. Endteil (23) eines Antriebsarmes (2), der mit einem Adapter (15) nach einem der Ansprüche 1 bis 13 oder mit einem Verbindungssystem nach Anspruch 14 ausgestattet ist.

## Claims

1. Adapter (15) intended for connecting a wiper (1) to a terminal part (23) of a driver arm (2), comprising a first wall (16) and a second wall (19), the first wall (16) and the second wall (19) being connected to one another by at least one connecting wall (22), **characterized in that** the connecting wall (22) is secant to a longitudinal midplane (P₂) of the adapter (15), and **in that** the first wall (16) has a first length (L₁) which is greater than a second length (L₂) of the second wall (19), the first length (L₁) and the second length (L₂) being measured along straight lines parallel to the longitudinal midplane (P₂), and **in that** the first wall (16) is provided with at least one means (33) for locking and/or unlocking the adapter (15) on the terminal part (23) .

2. Adapter (15) according to Claim 1, in which the first wall (16) ends with a first vertex (18) while the second wall (19) ends with a second vertex (21), the connecting wall (22) connecting the first vertex (18) and the second vertex (21).

3. Adapter (15) according to any one of the preceding claims, in which the adapter (15) comprises at least one profile that is triangular in a transverse plane (P₁).

4. Adapter (15) according to any one of the preceding claims, in which the connecting wall (22) comprises an external face (22a) which is convex when viewed from a position situated between the first wall (16) and the second wall (19).

5. Adapter (15) according to the preceding claim, in which the convex external face (22a) is formed at a radius of curvature (R) comprised between 5 mm and 100 mm, preferably comprised between 7 mm and 30 mm.

6. Adapter (15) according to any one of the preceding claims, comprising a pivot means able to allow rotation between the adapter (15) and a connector (8) with which the wiper is equipped.

7. Adapter (15) according to any one of the preceding claims, in which the first wall (16) and the second wall (19) are parallel to the longitudinal midplane (P₂) .

8. Adapter (15) according to any one of the preceding claims, which extends longitudinally between a first longitudinal end (53) and a second longitudinal end (54), the connecting wall (22) extending from the first longitudinal end (53) to the second longitudinal end (54).

9. Adapter (15) according to any one of the preceding claims, in which the adapter (15) comprises, at a first longitudinal end (53), a terminal face (27) one profile of which comprises at least one point of inflection (W).

10. Adapter (15) according to any one of the preceding claims, in which the adapter (15) comprises, at a first longitudinal end (53), a head (42) wider than a body of the adapter and provided with a notch (43) .

11. Adapter (15) according to Claims 9 and 10, in which the head (42) is delimited by a terminal face (27), the latter having an S-shaped profile.

12. Adapter (15) according to any one of the preceding claims, in which the locking and/or unlocking means (33) adopts the form of a tongue (40) equipped with a locking and/or unlocking button (33).

13. Adapter (15) according to the preceding claim, in which the tongue (40) is able to flex about an axis parallel to the longitudinal midplane (P₂).

14. System for connection between a wiper (1) and a terminal part (23) of a drive arm (2), comprising an adapter (15) according to any one of the preceding claims pivot-melted on a connector (8) able to be secured to the wiper (1).

15. Terminal part (23) of a drive arm (2) equipped with an adapter (15) according to any one of Claims 1 to 13 or with a connection system according to Claim 14.
